(19) Europäisches Patentamt European Patent Office Office européen des brevets

(11) **EP 3 464 916 B1**

(12) **FASCICULE DE BREVET EUROPEEN**

(45) Date de publication et mention de la délivrance du brevet:
**20.10.2021 Bulletin 2021/42**

(21) Numéro de dépôt: **17723659.3**

(22) Date de dépôt: **09.05.2017**

(51) Int Cl.:
***F16C 33/10*** *(2006.01)*

(86) Numéro de dépôt international:
**PCT/EP2017/060987**

(87) Numéro de publication internationale:
**WO 2017/202598 (30.11.2017 Gazette 2017/48)**

(54) **PALIER HYDRODYNAMIQUE A INJECTEURS ET DEFLECTEURS**

HYDRODYNAMISCHES LAGER MIT INJEKTOREN UND DEFLEKTOREN

HYDRODYNAMIC BEARING WITH INJECTORS AND DEFLECTORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.05.2016 EP 16290090**

(43) Date de publication de la demande:
**10.04.2019 Bulletin 2019/15**

(73) Titulaire: **Flender-Graffenstaden S.A.S.**
**67402 Illkirch-Graffenstaden (FR)**

(72) Inventeurs:
• **GAULIER, Thomas**
**67202 Wolfisheim (FR)**
• **HAMY, Pierre**
**67100 Strasbourg (FR)**
• **JALLAT, Eric**
**67400 Illkirch-Graffenstaden (FR)**

(74) Mandataire: **Michalski Hüttermann & Partner**
**Patentanwälte mbB**
**Speditionstraße 21**
**40221 Düsseldorf (DE)**

(56) Documents cités:
EP-A1- 0 298 835    EP-A1- 2 634 440
EP-A1- 3 067 577    US-A- 4 600 317
US-A- 5 879 085    US-A- 5 951 172

EP 3 464 916 B1

## Description

La présente invention concerne un palier hydrodynamique destiné à supporter un rotor ou arbre rotatif selon le préambule de la revendication 1.

La présente invention concerne notamment les paliers hydrodynamiques capables de supporter un rotor ou arbre rotatif et d'assurer son guidage en rotation, tel qu'utilisés couramment pour le support d'arbres rotatifs grande vitesse/grande puissance (réducteur ou multiplicateur de vitesse), pour le marché de l'énergie du gaz et du pétrole. Les paliers selon l'invention conviennent notamment aux applications à forte charge radiale et à vitesses d'arbre élevées.

Un tel palier est par exemple décrit dans la demande de brevet US 2002/0018604 A1. Il est typiquement formé d'un corps comprenant une surface interne formant une cavité circulaire agencée pour accueillir un arbre rotatif, par exemple l'arbre rotatif d'un pignon d'un réducteur de vitesse, de façon à supporter et guider en rotation ledit arbre. Ladite surface interne formant ladite cavité circulaire peut par exemple servir de surface de glissement pour ledit arbre rotatif. Dans d'autres variantes, ledit corps dudit palier peut par exemple comprendre des patins répartis sur la surface interne dudit corps, lesdits patins comprenant une surface sensiblement arquée et dirigée vers le centre de la cavité faisant office de surface de glissement pour ledit arbre rotatif. Usuellement, un dispositif d'alimentation en lubrifiant permet la lubrification d'interstices séparant la surface extérieure de l'arbre rotatif de ladite surface de glissement et la formation d'un film de lubrifiant entre la surface extérieure dudit arbre et chaque surface de glissement lorsque ledit arbre est en rotation à une vitesse de rotation supérieure à une vitesse limite définie par le dimensionnement du palier et de l'arbre, ledit lubrifiant (par exemple sa viscosité), la géométrie et les forces en présence dans le système palier-arbre. Le principe de base du palier hydrodynamique est d'avoir ledit film de lubrifiant intercalé entre l'arbre et la surface de glissement, ledit film permettant une rotation dudit arbre libre de contact avec ladite surface de glissement à partir de ladite vitesse limite.

Le document EP0298835 décrit un palier hydrodynamique à patins comprenant une surface supérieure dont une partie appelée « surface active » sert de surface de glissement pour ledit arbre rotatif, ledit palier comprenant au moins un patin compris dans un secteur angulaire actif du palier et au moins un patin compris dans un secteur angulaire passif du palier: la surface active d'au moins un patin du secteur angulaire passif est inférieure à la surface active de chacun des patins du secteur angulaire actif: en effet les patins du secteurs passif on une rainure centrale.

Le document EP2634440 montre un secteur passif à surface active réduite munie d'une rainure centrale et propose un circuit de refroidissement disposé sous les patins actifs.

Malheureusement, les paliers hydrodynamiques connus de l'homme du métier qui conviennent aux fortes charges et hautes vitesses, tel que le palier précédemment décrit, souffrent des problèmes suivants :

- une perte de puissance par friction ;
- une recirculation de lubrifiant chaud ;
- une consommation de lubrifiant excessive, engendrant, un circuit de refroidissement dudit lubrifiant surdimensionné afin d'éviter un échauffement dudit palier en cours de travail ;
- des instabilités pour une ou plusieurs vitesses de rotation dudit arbre, notamment dues à la composition des matrices de raideur et d'amortissement du système palier-arbre ;
- un flux axial du lubrifiant dans une direction substantiellement alignée avec l'axe longitudinal de rotation dudit arbre rotatif, ledit flux accroissant de plus les pertes par jets des engrenages situés à proximité dudit palier.

Un but de la présente invention est de proposer un palier hydrodynamique d'un nouveau genre qui permette de réduire la perte de puissance par friction, la consommation de lubrifiant, les instabilités et ledit flux de lubrifiant, notamment axial, et de réduire les pertes par jets des engrenages.

A cette fin, un palier hydrodynamique est décrit au travers des caractéristiques de la revendication 1.

Un ensemble de sous-revendications présente également des modes avantageux de réalisation dudit palier selon l'invention.

La présente invention concerne ainsi notamment un palier hydrodynamique comprenant un corps s'étendant en particulier axialement le long d'un axe A longitudinal, ledit corps comprenant une surface interne formant une cavité ou ouverture, par exemple cylindrique, s'étendant en particulier également axialement selon ledit axe A et radialement autour dudit axe, ladite cavité étant notamment ouverte à chacune de ses extrémités axiales, et agencée pour accueillir et entourer un arbre rotatif, usuellement de forme cylindrique, s'étendant axialement selon ledit axe A. En particulier, ledit axe A est un axe de révolution de ladite cavité. Selon la présente invention, une pluralité de patins sont montés, préférentiellement oscillants par rapport à la surface interne dudit corps, et installés dans ladite cavité, par exemple sur ladite surface interne dudit corps, de façon à supporter et guider en rotation ledit arbre rotatif autour de son axe longitudinal de rotation selon un sens de rotation w d'« amont » vers « aval ». Les patins du palier selon l'invention peuvent par exemple être des patins arqués (i.e. en forme de secteur de cylindre creux), s'étendant sur une partie de la circonférence de la surface interne et leur largeur s'étendant axialement selon ledit axe A. Chaque patin comprend en particulier une face supérieure dirigée vers le centre de la cavité, i.e. dirigée en direction dudit arbre rotatif, et comprenant une surface active configurée pour servir de surface de glissement pour ledit arbre rotatif. Ladite surface active selon l'invention est la surface du patin susceptible d'entrer en contact avec ledit arbre rotatif, par exemple lorsque ce dernier serait en appui contre ledit patin. Par opposition à la face supérieure, le patin comprend une face inférieure dirigée vers la surface interne dudit corps et reposant par exemple au moins partiellement contre ladite surface interne. Préférentiellement, chaque patin, ou plus précisément, la face supérieure de chaque patin, peut ainsi être définie comme comprenant une surface active et une surface inactive, la surface active comprenant l'ensemble des surfaces de la face supérieure du patin qui sont à une distance radiale M minimum de l'axe de rotation longitudinal dudit arbre rotatif par opposition à la surface « inactive » qui comprend l'ensemble des surfaces du patin qui se trouvent à une distance radiale M' supérieure à M et qui ne peuvent ainsi pas entrer en contact avec ledit arbre rotatif lorsque ce dernier viendrait à appuyer contre ledit patin, par exemple lorsque ce dernier n'est plus en rotation. Préférentiellement, ledit corps est de forme annulaire, la cavité étant alors simplement une ouverture cylindrique au centre de l'anneau, i.e. du corps de forme annulaire, ledit anneau comprenant lesdits patins installés sur sa périphérie interne qui forme ladite surface interne, le diamètre de la cavité étant alors par exemple égal à 2M.

Ledit palier selon l'invention comprend en particulier :

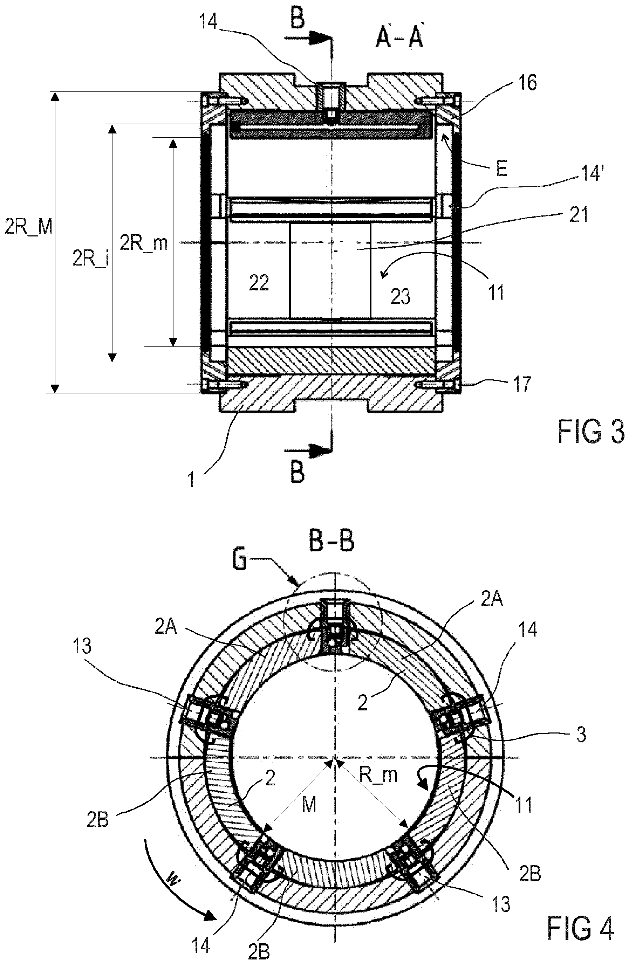

- au moins un patin compris, par exemple au moins en partie, dans un secteur angulaire actif dudit palier et au moins un patin compris, par exemple au moins en partie, dans un secteur angulaire passif dudit palier, ledit secteur angulaire actif étant défini, par opposition au secteur angulaire passif, comme étant la portion de palier reprenant la plus grande charge ou effort généré par l'arbre rotatif lorsque le palier supporte et entoure ledit arbre rotatif et que ce dernier est en rotation. Il est en effet bien connu de l'homme du métier que la répartition des forces exercées par l'arbre rotatif en rotation sur ledit palier n'est pas homogène et ainsi les forces exercées par l'arbre rotatif en rotation sur certaines parties de la cavité dudit palier sont supérieures aux forces exercées par l'arbre rotatif en rotation sur d'autres parties de la cavité dudit palier. Cela permet de définir au moins deux zones ou portions de palier lorsque l'on considère l'ensemble des forces exercées par l'arbre en rotation sur les parois de la cavité, ou indirectement sur la surface interne du corps dudit palier, respectivement une zone reprenant la plus grande charge, i.e. où la valeur des forces exercées est maximum et qui correspond au secteur angulaire actif, et une zone reprenant la plus faible charge, i.e. où la valeur des forces exercées est minimum et qui correspond au secteur angulaire passif. Selon la présente invention, ce secteur angulaire passif et respectivement ce secteur angulaire actif comprend au moins un patin situé tout ou en partie dans ledit secteur angulaire passif, respectivement actif. Typiquement, le secteur angulaire actif est situé vers le haut du palier tel que représenté en figure 4 (secteur actif 2A) et le secteur angulaire passif est typiquement situé vers le « bas » dudit palier (secteur passif 2B). Préférentiellement, tout patin situé au moins en partie dans un secteur angulaire actif sera considéré comme faisant intégralement partie dudit secteur angulaire actif;

- au moins un injecteur disposé entre deux patins, lesdits patins étant par exemple consécutifs selon ledit sens de rotation w, préférentiellement fixé audit corps, et configuré pour alimenter en lubrifiant ladite face supérieure, en particulier ladite surface active;

- au moins un déflecteur disposé entre deux patins, lesdits patins étant par exemple consécutifs selon ledit sens de rotation w, préférentiellement fixé audit corps, et configuré d'une part pour réduire une recirculation de lubrifiant sur ladite face supérieure et d'autre part pour orienter un flux dudit lubrifiant depuis la face supérieure latéralement en direction d'au moins une rainure latérale d'évacuation de lubrifiant (par « latéralement », il est entendu selon une direction sensiblement parallèle audit axe A vers ladite rainure latérale d'évacuation dudit lubrifiant) ;

tel que la surface active d'au moins un, en particulier de chaque, patin du secteur angulaire passif est inférieure à la surface active de chacun des patins du secteur angulaire actif.

Préférentiellement, la surface active de chacun desdits patins du secteur angulaire actif comprend une surface lisse en forme de bande centrale par rapport à la largeur dudit patin, ladite surface lisse s'étendant ainsi, selon le sens de rotation w, i.e. selon la circonférence de ladite cavité, continument d'une extrémité à l'autre dudit patin, et, selon la largeur dudit patin, i.e. selon l'axe A, sur une partie centrale dudit patin, préférentiellement uniquement sur une partie centrale dudit patin. La face supérieure du patin selon ce mode de réalisation comprend ainsi, et par exemple, une surface inactive formée de deux bandes latérales de surfaces lisses s'étendant continument d'une extrémité à l'autre dudit patin et bordant latéralement ladite bande centrale de surface active dudit patin.

Selon l'invention, la surface active d'au moins un patin du secteur angulaire passif comprend une surface sculptée de façon à créer des rainures secondaires dirigées vers ladite rainure latérale de façon à orienter ledit lubrifiant vers cette dernière lorsque l'arbre rotatif est en rotation. Selon ce mode de réalisation, lesdites rainures secondaires sont pratiquées depuis la surface active dans l'épaisseur dudit patin, le « fond » desdites rainures secondaires appartenant dès lors à la surface inactive dudit patin et permet de collecter ledit lubrifiant et de le diriger vers une desdites rainures latérales. En particulier, ladite surface active dudit patin du secteur angulaire passif comprend une surface lisse en forme de bande centrale tel que décrite précédemment, et deux bandes latérales à surface sculptée chacune disposée de part et d'autre de la surface lisse selon ladite largeur dudit patin, i.e. respectivement d'un côté latéral de la surface lisse en forme de bande et de l'autre côté latéral de ladite surface lisse en forme de bande, chacune desdites bandes latérales à surface sculptée comprenant lesdites rainures secondaires permettant d'orienter un flux de lubrifiant depuis ladite surface lisse en forme de bande centrale vers lesdites rainures latérales d'évacuation du lubrifiant. Préférentiellement, au moins une ou chaque rainure secondaire forme un angle oblique avec un plan perpendiculaire audit axe A. En particulier, lesdites rainures secondaires sont les bras d'un chevron ou d'un « V » dont la pointe se trouve dans la partie centrale du patin ou appartient à ladite surface lisse en forme de bande centrale.

Selon un mode préféré de réalisation, le palier selon l'invention comprend en particulier une bague latérale en forme d'anneau disposée latéralement contre le corps dudit palier et configurée pour bloquer un flux axial (i.e. dirigé selon l'axe A) dudit lubrifiant hors de ladite cavité, ladite bague latérale étant préférentiellement fixée audit corps de palier de façon à créer ladite rainure latérale. En particulier, la rainure latérale ou ladite bague latérale comprend au moins un orifice de calibration d'un débit de fuite de lubrifiant hors dudit palier, ledit orifice de calibration comprenant en particulier un système de réglage du débit de fuite, au moyen par exemple d'un système de visserie. Ledit palier selon l'invention comprend en particulier une première rainure latérale et une seconde rainure latérale, disposées latéralement de part et d'autre dudit palier, et chacune préférentiellement formée par fixation d'une bague latérale au corps dudit palier. Lesdites première et seconde rainures latérales sont notamment configurées pour empêcher un flux axial de lubrifiant de sortir hors du palier, chaque rainure latérale étant capable de collecter un flux axial quittant ladite surface active des patins dudit palier et de le diriger pour qu'il soit évacué radialement vers l'extérieur dudit palier, via notamment ledit orifice de calibration. Chacune des rainures latérales coopère notamment avec les déflecteurs afin d'évacuer latéralement le lubrifiant.

Selon la présente invention, au moins deux patins consécutifs sont préférentiellement couplés l'un à l'autre par un système élastique destiné à limiter un flottement angulaire desdits patins. Par exemple l'extrémité d'un desdits patins est couplée par ledit système élastique à l'extrémité la plus proche d'au moins un de ses voisins, ledit système élastique comprenant par exemple un anneau élastique ouvert dont chaque extrémité est couplée à un patin respectif. Préférentiellement, chaque patin est couplé à chacun de ses plus proches voisins par ledit système élastique.

Préférentiellement, le déflecteur selon l'invention comprend une première partie et une seconde partie s'étendant par exemple chacune axialement selon ledit axe A selon au moins une partie, préférentiellement toute, la largeur dudit palier, la première partie étant destinée à se trouver en amont de la seconde partie par rapport au sens de rotation w et au-dessous du niveau de la surface active du (ou des) patin(s) le(s) plus proche(s) lorsque ledit déflecteur équipe ledit palier, ladite première partie étant configurée pour récupérer et évacuer latéralement ledit lubrifiant, la seconde partie s'étendant radialement en direction du centre de la cavité notamment jusqu'à une distance radiale la séparant du centre de la cavité égale à la distance radiale séparant ladite (ou lesdites) surface(s) active(s) la (les) plus proche(s) dudit centre de la cavité, par exemple s'étendant au maximum jusqu'à ladite distance radiale M, de façon à entraver au moins partiellement un déplacement dudit lubrifiant depuis une zone en amont de ladite seconde partie vers une zone en aval de ladite seconde partie, ladite seconde partie s'étendant de plus et préférentiellement vers l'amont en porte-à-faux au-dessus de la première partie (i.e. de façon à surplomber ladite première partie ou autrement dit à former une saillie radialement à la verticale de ladite première partie selon une direction centripète). En particulier, la seconde partie comprend une surface supérieure plane s'inscrivant ou se trouvant dans un plan dont le prolongement est tangent à au moins une surface active d'un des patins les plus proches, ladite surface supérieure plane s'étendant en direction de l'amont en porte-à-faux au-dessus d'au moins une partie de ladite première partie. Selon la présente invention, par « au-dessous du niveau de la surface active » il est entendu que la première partie est plus éloignée du centre de la cavité que la surface active. En effet, selon la présente invention, les notions « au-dessus » et « au-dessous » sont définies par rapport au centre de la cavité : ainsi un objet O1 sera au-dessus, respectivement au-dessous, d'un objet O2, si l'objet O1 est situé à une position radialement moins éloignée, respectivement plus éloignée, du centre de la cavité par rapport à la position de l'objet O2. De plus, la distance par rapport au centre de la cavité est préférentiellement et de manière générale la distance radiale séparant un point ou un objet dudit axe A, ledit axe A étant en particulier un axe de révolution de la cavité notamment lorsque cette dernière est cylindrique.

En particulier, chaque injecteur et/ou chaque déflecteur est fixé de manière amovible audit corps dudit palier, par exemple dans un espace compris entre deux patins successifs, ledit espace pouvant être façonné ou creusé au moins partiellement dans le corps dudit palier, et s'ouvrant notamment en direction de ladite cavité. Préférentiellement, chaque espace destiné à accueillir un injecteur et/ou un déflecteur est de forme oblongue, la longueur dudit espace étant dirigée axialement, i.e. selon la largeur dudit palier, s'étendant par exemple sur toute la largeur dudit palier. Chaque espace comprend en particulier au moins une ouverture radiale, par exemple creusée dans le corps dudit palier, et dirigée vers l'extérieur dudit palier, formée par exemple par un ou plusieurs canaux dirigés substantiellement radialement vers l'extérieure dudit palier, afin de permettre une alimentation en lubrifiant dudit injecteur notamment radialement depuis l'extérieur dudit palier ou une évacuation du lubrifiant récupéré par le déflecteur, ledit lubrifiant étant alors évacué radialement vers l'extérieur dudit palier, par exemple aux extrémités axiales dudit espace.

Préférentiellement, le déflecteur a un corps oblong configuré pour être insérable dans ledit espace, ledit corps oblong étant formé de ladite première partie et de ladite seconde partie qui sont chacune également de forme oblongue. Une section axiale de ladite première partie, i.e. selon sa longueur, et dans un plan passant par ledit axe A et s'étendant radialement afin de couper ledit déflecteur selon sa longueur lorsque ce dernier est installé dans un desdits espaces, comprend en particulier une forme triangulaire ou est préférentiellement triangulaire, par exemple en forme de triangle isocèle, la forme triangulaire ayant en particulier un axe de symétrie coupant la largeur des patins, ou la longueur de ladite première partie, en deux parties égales, et un sommet pointant vers ledit axe A. En particulier, ledit sommet est un sommet commun aux deux côtés de longueurs égales dudit triangle isocèle et pointe vers ledit axe A lorsque ledit déflecteur est inséré dans ledit espace et est situé dans le plan médian du patin, i.e. le plan coupant ledit patin selon sa largeur en deux parties de largeur égale. En particulier, ledit sommet appartenant à ladite première partie est ainsi situé en-dessous du niveau de la surface active du ou des patins les plus proches lorsque ledit déflecteur est installé dans ledit espace de façon à pouvoir récupérer ledit lubrifiant et le diriger latéralement le long de pentes se joignant audit sommet et formant les côtés de la forme triangulaire, ledit lubrifiant étant dirigé le long desdites pentes de façon à s'éloigner du centre de la cavité ou de l'arbre rotatif jusqu'à des rainures latérales d'évacuations. Lesdites pentes sont par exemple des côtés de longueurs égales dudit triangle isocèle. Préférentiellement, ladite section comprenant ladite forme triangulaire est constante selon la largeur de la première partie dudit déflecteur.

Selon un mode préféré de réalisation, ladite section comprenant une forme triangulaire est maintenue constante d'amont en aval selon toute la largeur de ladite première partie, ledit déflecteur comprenant alors, directement en aval de ladite première partie comprenant la section constante de forme triangulaire, ladite seconde partie dudit déflecteur, qui a par exemple une section axiale de forme rectangulaire, ladite seconde partie pouvant être ainsi substantiellement parallélépipédique, ladite seconde partie comprenant en particulier un côté ou face dirigé vers le centre de la cavité et pour lequel la distance radiale séparant ledit côté dudit centre de la cavité ou de l'axe A est égale à la distance radiale séparant la surface active du ou des patins les plus proches dudit centre de la cavité ou de l'axe A. Optionnellement, ledit côté comprend une extension dirigée vers l'amont recouvrant partiellement la première partie dudit déflecteur caractérisé par ladite section comprenant une forme triangulaire, sans toutefois toucher cette dernière, i.e. d'une manière libre de contact avec cette dernière, de manière à former ledit porte-à-faux au-dessus de ladite section comprenant la forme triangulaire de ladite première partie. En particulier, ladite extension s'étend vers l'amont sur toute la longueur de la première partie dudit déflecteur. Avantageusement, cette section comprenant la forme triangulaire de ladite première partie, optionnellement en coopération avec ladite partie de section rectangulaire qui peut comprendre ladite extension au moins partiellement en porte-à-faux au-dessus de la section comprenant la forme triangulaire, permet une récupération et évacuation latérale efficaces du lubrifiant lors de la rotation de l'arbre rotatif, notamment de manière symétrique le long de chacun des côtés de la forme triangulaire de la première partie dudit déflecteur.

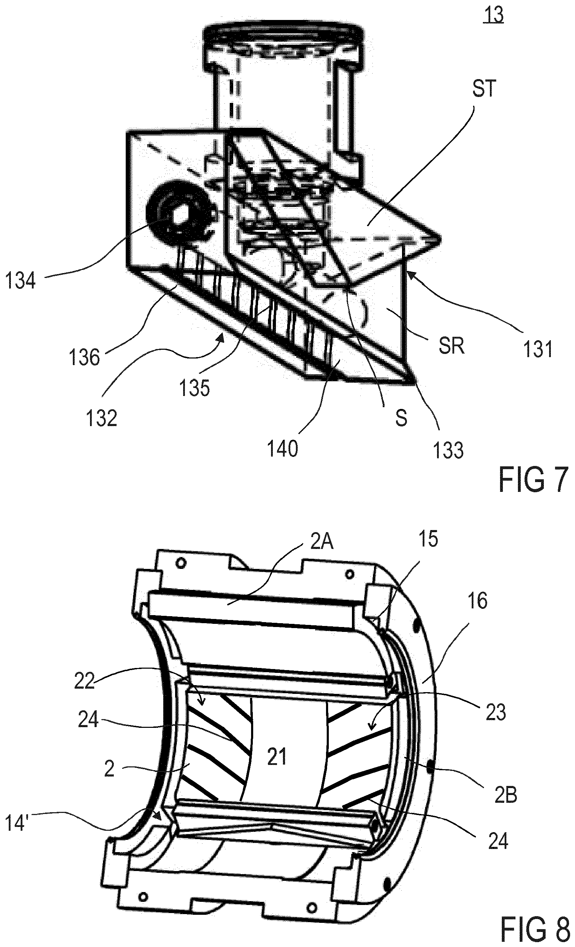

L'injecteur selon l'invention est soit un dispositif séparé dudit déflecteur, i.e. l'injecteur et le déflecteur sont deux dispositifs distincts, soit incorporé à ladite seconde partie dudit déflecteur, la première et la seconde partie dudit déflecteur formant alors un dispositif d'«injection/déflexion», i.e. le déflecteur comprenant également la fonction d'injection de par les caractéristiques de sa seconde partie comme illustré plus tard en figure 7. Dans ce dernier cas, la seconde partie dudit déflecteur comprend ledit injecteur et a également toutes les caractéristiques dudit injecteur telles que décrites dans ce qui suit.

Ledit injecteur, par exemple la seconde partie dudit déflecteur dans le cas du déflecteur comprenant la fonction d'injection, comprend préférentiellement un corps oblong conçu pour être monté dans un desdits espace, par exemple entre deux patins successifs. Ledit corps oblong est préférentiellement de forme substantiellement parallélépipédique, sa longueur étant dirigée selon ledit axe A. Ledit corps oblong comprend en particulier un canal axial le traversant axialement, i.e. selon sa longueur, fermé ou apte à être fermé par des moyens de cloisonnement à chacune de ses extrémités axiales, i.e. en direction desdites rainures latérales d'évacuation lorsque ledit injecteur est installé dans ledit espace, ledit canal axial étant destiné à l'alimentation en lubrifiant de ladite surface active du patin aval le plus proche et faisant partie d'un circuit d'amenée de lubrifiant. Préférentiellement, lesdits moyens de cloisonnement sont réglables en position entre une position fermée et une position ouverte, de façon à permettre une variation de l'obturation des extrémités axiales dudit canal axial, de sorte qu'un flux de lubrifiant soit empêché de sortir dudit canal axial par ses extrémités axial lorsque la position est fermée, et qu'un flux de lubrifiant puisse sortir dudit canal axial par ses extrémités axiales en direction desdites rainures latérales lors d'une position intermédiaire entre la position ouverte et la position fermée. Le réglage des moyens de cloisonnement permet avantageusement de régler le débit de lubrifiant sortant par les extrémités axiales dudit canal axial. Ledit canal axial est en particulier pourvu d'un organe de raccordement permettant de le raccorder à un canal d'alimentation en lubrifiant, ledit raccordement étant réalisable notamment via ladite ouverture radiale dudit espace destiné à accueillir l'injecteur ou le dispositif d'injection/déflexion.

Ledit canal axial dudit injecteur comprend en particulier un ou plusieurs orifices de sortie dirigés vers la cavité dudit palier, par exemple en direction de l'axe A, afin d'approvisionner en lubrifiant ladite surface active des patins. En particulier, chaque orifice de sortie est dirigé, par exemple radialement, en direction d'une surface de lubrification dudit injecteur qui est à une distance radiale du centre de la cavité ou de l'axe A sensiblement égale à la distance radiale séparant la surface active du patin le plus proche dudit centre de la cavité ou axe A, lesdits orifices débouchant sur ladite surface de lubrification. Ladite surface de lubrification peut comprendre par exemple une rigole, s'étendant par exemple sur toute la longueur dudit injecteur, et sur laquelle débouche chacun desdits orifices. Ladite rigole permet notamment une distribution homogène dudit lubrifiant sur toute la largeur de la surface active du patin. Lesdits orifices sont notamment également espacés les uns des autres au niveau de ladite surface de lubrification et selon la direction axiale, i.e. la longueur du corps dudit injecteur. Préférentiellement, au moins une partie desdits orifices a un diamètre différent d'au moins un autre desdits orifices de façon à maintenir un débit identique pour tous les orifices dudit injecteur. En effet, selon la présente invention, ledit diamètre desdits orifices est déterminé par calcul de la perte de pression en amont de chaque orifice dans le circuit d'amenée de lubrifiant de façon à maintenir ledit débit identique pour chaque orifice, quelle que soit sa position axiale selon la longueur dudit injecteur. De cette façon, la variation du diamètre des orifices permet de compenser une variation de pression du lubrifiant lors de sa distribution via lesdits orifices au moyen dudit circuit d'amenée de lubrifiant, de façon à ce que chaque orifice distribue la même quantité de lubrifiant en fonction du temps.

Selon un mode de réalisation préférentiel de la présente invention, la seconde partie dudit déflecteur comprend ledit injecteur afin de former ledit dispositif d'injection/ déflexion. Ce dernier comprendra ainsi deux parties, respectivement une partie injection et une partie déflexion, ladite partie injection étant ladite seconde partie du déflecteur précédemment décrite incorporant ledit injecteur, et la partie déflexion étant formée par ladite première partie telle que décrite précédemment, chaque dispositif d'injection/déflexion étant configuré pour être installé dans un desdits espaces de façon à ce que la partie déflexion soit située en amont de ladite partie injection, ledit dispositif d'injection/déflexion ayant ainsi la fonction d'injecteur et la fonction de déflecteur réunies en un seul dispositif amovible. En effet, selon ce mode préférentiel de réalisation, ledit déflecteur et ledit injecteur forment un et un seul dispositif amovible appelé dispositif d'injection/déflexion qui peut être installé dans un espace dudit palier, par exemple entre deux patins consécutifs.

Selon la présente invention, la distance angulaire séparant un injecteur d'un autre injecteur situé directement en amont ou en aval est préférentiellement $\pi/n$ [rad] où n est le nombre total d'injecteurs que comprend ledit palier, respectivement la distance angulaire séparant un déflecteur d'un autre déflecteur situé directement en amont ou en aval est préférentiellement $\pi/m$ [rad] où m est le nombre total de déflecteurs que comprend ledit palier. En particulier, m et n sont supérieurs ou égaux à 2. Préférentiellement, m = n = 5. En particulier, selon le mode préférentiel de réalisation comprenant lesdits dispositifs d'injection/déflexion, la distance angulaire séparant un dispositif d'injection/déflexion installé dans un espace dudit palier d'un dispositif d'injection/déflexion voisin installé directement en amont ou en aval dans le prochain autre espace dudit palier est $\pi/t$ [rad] où t est le nombre total de dispositifs d'injection/déflexion montés dans les espaces dudit palier. Préférentiellement, t est supérieure ou égal à 3, en particulier t=5.

Avantageusement, lesdits déflecteurs permettent de stabiliser l'arbre lors de sa rotation à hautes vitesses en dirigeant le lubrifiant en direction desdites rainures latérales, réduisant ou supprimant ainsi un flux axial de lubrifiant hors dudit palier, ledit lubrifiant étant obligé de suivre un chemin défini par la forme géométrique dudit déflecteur et conduisant ledit lubrifiant soit vers la première, soit vers la seconde rainure latérale. Ainsi, selon la présente invention, le flux axial sortant du coussinet dudit palier est évité par captage du lubrifiant ne servant plus à la formation du film hydrodynamique au moyen desdits déflecteurs et en dirigeant ce dernier depuis le déflecteur vers une des rainures latérales.

En particulier, lesdites rainures latérales selon l'invention s'étendent selon la circonférence de ladite cavité de façon à border chacune un des côtés latéraux des patins dudit palier de façon à collecter un flux axial de lubrifiant. Selon un premier mode de réalisation, chaque rainure latérale peut être une rainure en forme d'arc de cercle creusée ou façonnée dans le corps dudit palier de façon à être ouverte en direction de ladite cavité et s'étendant par exemple le long d'un des bords latéraux dudit corps dudit palier. Chaque rainure latérale peut par exemple s'étendre le long d'au moins une partie de la circonférence interne dudit palier, s'étendant par exemple sur 180° ou sur l'ensemble des secteurs angulaires passifs, ou préférentiellement sur toute la circonférence interne dudit palier, i.e. sur toute la circonférence de la cavité. Selon un second mode de réalisation, chacune desdites rainures latérales est obtenue en fixant sur chacun des côtés latéraux dudit palier ladite bague latérale en forme d'anneau de diamètre intérieur minimum substantiellement égal au double du rayon séparant la surface active d'un patin du centre de la cavité (ou de l'axe A), la partie de l'anneau dirigée vers ledit corps et destinée à être fixée à une face latérale (i.e. selon l'axe A) de ce dernier est caractérisée par une géométrie structurelle configurée pour former une desdites rainures latérales lorsque ledit anneau est fixé latéralement au corps dudit palier. Par exemple, ladite partie de l'anneau dirigée vers ledit corps est caractérisée par un diamètre intérieur supérieur audit diamètre intérieur minimum de façon à créer une cavité (i.e. ladite rainure latérale) entre ladite face latérale dudit corps et la partie de l'anneau caractérisée par ledit diamètre intérieur minimum. Dans ce cas, ledit anneau peut être décrit comme formé par deux anneaux solidaires l'un de l'autre, respectivement un premier anneau caractérisé par ledit diamètre intérieur supérieur et un second anneau caractérisé par ledit diamètre intérieur minimum, ledit anneau étant configuré pour être monté sur un côté latéral dudit palier (i.e. sur une desdites extrémités axiales dudit palier) avec sa partie formée dudit premier anneau venant en contact avec ledit côté latéral.

Préférentiellement, chacune desdites rainures latérales comprend au moins une ouverture radiale, par exemple un perçage radial, configurée pour être disposée en vis-à-vis de l'extrémité longitudinale de la première partie dudit déflecteur, et destinée à évacuer le lubrifiant collecté dans la rainure latérale radialement vers l'extérieur dudit palier, par exemple vers un système de circulation ou recirculation dudit lubrifiant.

Des avantages dudit palier selon l'invention et des exemples de réalisation et d'application sont fournis à l'aide des figures suivantes pour lesquelles des références identiques indiquent des objets identiques ou équivalents :

Figure 1    Vue 3D d'un mode de réalisation préféré d'un palier hydrodynamique selon l'invention.

Figure 2    Vue latérale du mode de réalisation préféré du palier hydrodynamique selon l'invention.

Figure 3    Coupe selon le plan A'-A' du palier selon figure 2.

Figure 4    Coupe transversale médiane du palier selon l'invention, i.e. selon le plan B-B du palier représenté en figure 3.

Figure 5    Détail G d'une partie du palier représenté en figure 4.

Figure 6    Coupe selon le plan A'-A' du détail G représenté en figure 5.

Figure 7    Exemple de réalisation d'un dispositif d'injection/déflexion selon l'invention.

Figure 8    Vue 3D d'une partie de palier selon l'invention.

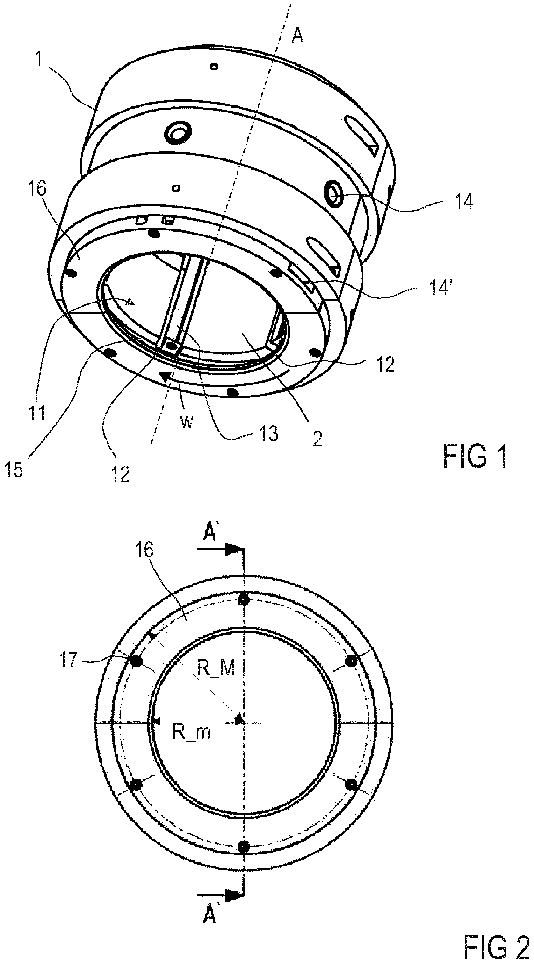

La figure 1 montre une représentation schématique tridimensionnelle (3D) d'un mode de réalisation préférentiel d'un palier hydrodynamique selon l'invention. Ce dernier comprend un corps 1 annulaire comprenant une surface interne formant une cavité autour d'une direction axiale représentée par l'axe A, ledit corps 1 dudit palier étant préférentiellement en forme de cylindre creux. Ledit corps 1 est agencé pour entourer un arbre rotatif (non représenté) comprenant un axe longitudinal de rotation destiné à être disposé selon ladite direction axiale au centre dudit corps 1. En particulier, ledit axe longitudinal de rotation et ledit axe A ont sensiblement la même direction. Ledit palier est fixe en rotation et est configuré pour faciliter une rotation dudit arbre rotatif selon le sens de rotation w tel qu'indiqué par la flèche correspondante en figure 1. Le sens de rotation w est orienté d'amont vers aval.

La cavité dudit corps 1, ou autrement dit, la partie creuse dudit palier, est agencée pour accueillir ledit arbre rotatif afin de le guider et le supporter lors de sa rotation selon un sens de rotation w d'«amont» vers «aval» autour dudit axe A. En particulier, une pluralité de patins 2 de maintien radial dudit arbre rotatif sont montés, par exemple oscillants, sur la surface interne dudit corps 1 formant ladite cavité de façon à assurer le support et le guidage en rotation dudit arbre rotatif. A cette fin, chaque patin 2 présente une face supérieure 11 comprenant une surface active servant de surface de glissement pour ledit arbre rotatif lors de sa rotation dans le sens de rotation w. Comme illustré en figure 4 et connu de l'homme du métier, ledit palier selon l'invention comprend au moins deux zones, respectivement une zone reprenant les plus grandes charges ou forces exercées par l'arbre rotatif en rotation dans ledit palier et une zone où lesdites charges ou forces sont minimales, chacune de ces deux zones comprenant selon la présente invention au moins un patin 2 situé tout ou en partie dans ladite zone, et le patin situé tout ou en partie dans la zone des forces minimales étant caractérisé par une surface active inférieure au patin situé dans tout ou en partie dans la zone de grandes charges.

En considérant par exemple un palier découpé en n zones $z_i$ (i allant de 1 à n) comprenant au moins ladite zone où la force exercée sur ledit palier par l'arbre rotatif en rotation est maximale et ladite zone où la force exercée sur ledit palier par l'arbre rotatif en rotation est minimale, i.e. $n \geq 2$, l'arbre rotatif exerçant une force $F_i$ sur la zone $z_i$, un secteur angulaire actif est en particulier défini comme étant l'ensemble des zones parmi les n zones $z_i$ dudit palier pour lesquelles la force $F_i$ exercée par l'arbre rotatif en rotation est supérieure à X fois la moyenne des forces exercée par ledit arbre rotatif en rotation sur chacune desdites zones, X pouvant prendre en particulier des valeurs comprises entre 1 et 1.5, avec préférentiellement X = 1.5. Autrement dit, si

$$F_i > X \cdot \frac{\sum_{i=1}^{n} F_i}{n}$$

, avec $X \in [1,1.5]$ alors la zone $z_i$ sur laquelle s'exerce la force $F_i$ appartient au secteur angulaire actif. Préférentiellement, un patin compris en partie dans le secteur angulaire actif est considéré comme faisant partie intégralement dudit secteur angulaire actif.

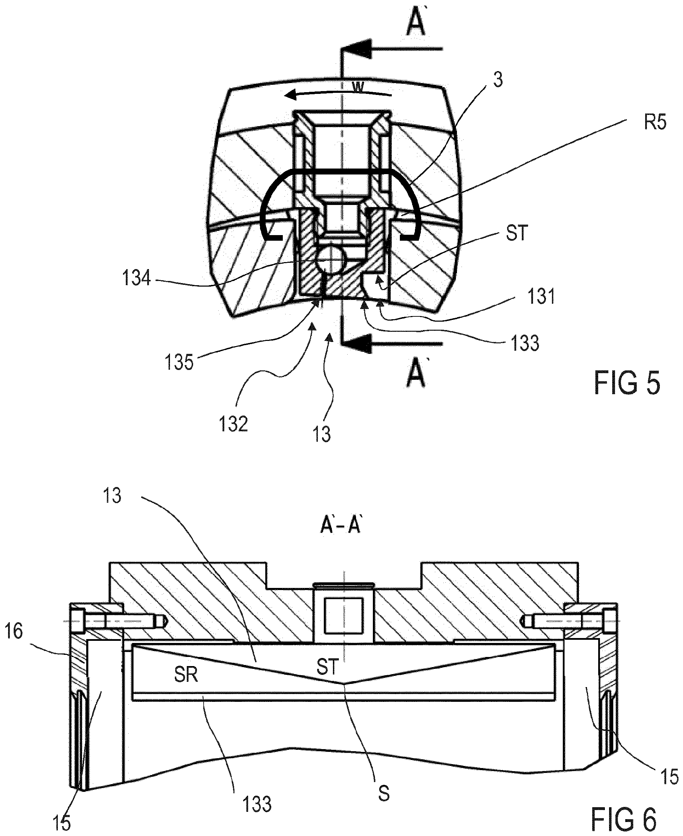

Selon le mode préférentiel de réalisation illustré en figure 4, au moins un patin 2 est situé ou compris tout ou en partie dans le secteur angulaire actif 2A (i.e. ledit secteur angulaire dudit palier reprenant la plus grande charge générée par la rotation dudit arbre rotatif à haute vitesse) et au moins un patin 2 est situé ou compris tout ou en partie dans le secteur angulaire passif 2B (i.e. le secteur angulaire dudit palier ne reprenant pas la plus grande charge générée par la rotation dudit arbre rotatif à haute vitesse, par opposition au secteur angulaire actif). Préférentiellement, chaque patin est monté oscillant sur la surface interne dudit corps 1 et selon la circonférence de ladite cavité de façon à dégager, entre chaque patin consécutif, un espace 12 destiné à accueillir un injecteur et/ou un déflecteur, ou en particulier un dispositif d'injection/déflexion 13 tel que représenté en détail en figures 5-7, ledit dispositif d'injection/déflexion 13 comprenant au moins deux parties, une partie faisant office d'injecteur et une partie faisant office de déflecteur.

Selon la présente invention, chaque patin 2 compris dans un secteur angulaire passif 2B est caractérisé par une surface active inférieure à la surface active d'un patin 2 compris dans un secteur angulaire actif 2A. La surface active d'un patin comprend, selon la présente invention, l'ensemble des points de la face supérieure 11 dudit patin qui entreraient en contact avec ledit arbre rotatif si ce dernier roulait d'amont en aval sur ladite face supérieure 11. Usuellement, il s'agit de l'ensemble des points situés à une distance radiale M de l'axe A, la distance radiale M étant la plus petite distance séparant la face supérieure 11 dudit patin de l'axe A. Comme illustré par exemple en figure 8, le patin 2 du secteur angulaire passif 2B comprend une surface lisse 21 en forme de bande centrale s'étendant au centre (selon la largeur dudit patin 2) dudit patin 2, d'une extrémité amont à son extrémité avale, ladite surface lisse 21 étant bordée par deux bandes latérales, respectivement une première bande latérale 22 et une seconde bande latérale 23, qui comprennent chacune un ensemble de points situés à une distance radiale dudit axe A qui est supérieure à M. En d'autres termes, chacune des bandes latérales 22, 23 comprend des surfaces radialement plus éloignées du centre de la cavité que la surface lisse 21. Par exemple, la première bande latérale 22 et la seconde bande latérale 23 sont des bandes sculptées, i.e. comprenant des rainures, creusées depuis la face supérieure 11 du patin dans le corps de ce dernier de façon à diminuer la surface active dudit patin en créant des surfaces creuses formées d'ensembles de points incapables de rentrer en contact avec ledit axe rotatif lorsque ce dernier roulerait sur la face supérieure 11 du patin, ou autrement dit et en particulier, des ensembles de points situés à une distance radiale de l'axe A supérieure à M. Par exemple, la première bande latérale 22 et la seconde bande latérale 23 ont des surfaces nominales situées au même niveau que la surface lisse 21, mais sont pourvues de rainures secondaires 24 creusées dans l'épaisseur du patin en direction de la face inférieure dudit patin et configurées pour collecter du lubrifiant et l'acheminer vers des rainures latérales 15, qui permettent par exemple de l'évacuer par gravité ou pompage via des ouvertures radiales 14'. Préférentiellement, les rainures secondaires 24 de la face supérieure 11 des patins 2 du secteur angulaire passif 2B s'éloignent d'amont en aval obliquement par rapport à un plan perpendiculaire audit axe A. Elles forment par exemple une structure en chevron on en V lorsque une rainure secondaire 24 ou son prolongement croise une autre rainure secondaire ou son prolongement.

Comme illustré en figures 4 et 5, la présente invention propose en particulier un couplage élastique d'au moins deux patins consécutifs, ou préférentiellement de chaque patin 2 avec ses voisins les plus proches, au moyen d'un système élastique 3, par exemple une bague métallique ouverte. Ledit système élastique 3 est configuré pour coupler une extrémité avale d'un patin à l'extrémité amont du patin situé directement en aval en passant par exemple sous ledit injecteur et/ou déflecteur lorsque ce dernier est situé entre ladite extrémité avale du patin et ladite extrémité amont du patin consécutif situé en aval. Comme illustré en figure 5, les patins sont préférentiellement montés oscillants par rapport à la surface interne dudit corps 1, un espace R5 étant dégagé notamment entre l'extrémité amont, respectivement avale, du patin et la surface interne dudit corps de façon à ce que ledit patin 2 soit mobile autour d'un axe parallèle audit axe A ou autour d'une rotule. Le système élastique 3 selon l'invention permet avantageusement de stabiliser le mouvement de l'arbre rotatif en rotation en limitant les vibrations.

Selon le mode préférentiel de réalisation de la figure 1, chaque espace 12 est une cavité oblongue, en particulier parallélépipédique, dont la longueur est dirigée selon l'axe A, ladite cavité étant ouverte en direction dudit axe A, et ses parois étant formées par exemple par l'extrémité amont d'un patin, l'extrémité aval du patin voisin situé directement en amont, et la surface interne dudit corps 1. En d'autres termes, ledit espace 12 est préférentiellement l'espace compris entre deux patins consécutifs et la surface interne dudit corps 1. Chaque espace 12 comprend notamment une ouverture radiale 14, préférentiellement centrée par rapport à la longueur dudit espace 12, ou notamment par rapport à la largeur dudit corps 1, et s'ouvrant radialement vers l'extérieur dudit palier de façon à permettre une alimentation en lubrifiant d'un interstice situé entre l'arbre rotatif et les patins, ladite alimentation étant réalisée au moyen d'un circuit d'amenée de lubrifiant se terminant par un canal 134 débouchant dans ladite cavité comme expliqué plus loin.

Les rainures latérales 15 selon la présente invention peuvent être réalisées de différentes façons. Selon un premier mode de réalisation non illustré, chacune d'elles peut par exemple être creusée dans le corps 1 dudit palier, le long d'au moins une partie de la circonférence de la cavité formée par la surface interne dudit palier, chacune bordant un des côtés latéraux (i.e. selon l'axe A) dudit palier et limitant latéralement ladite surface interne. Ainsi qu'illustré en figures 1-4, lesdites rainures latérales 15 peuvent également être réalisées en fixant contre chaque côté latéral dudit palier, une bague latérale 16 en forme d'anneau ou de partie d'anneau (ledit anneau, respectivement partie d'anneau, ayant la forme d'une couronne circulaire, respectivement d'un secteur de couronne circulaire). Préférentiellement, ladite bague latérale 16 est caractérisée par un rayon interne minimum R_m substantiellement égal à la distance radiale M séparant la surface active des patins dudit axe A ou dudit centre de la cavité dudit palier et optionnellement par un rayon interne maximum R_i supérieur audit rayon interne minimum R_m. Une telle bague latérale 16 à double rayon interne R_m et R_i est illustrée en figure 3 est peut être formée par une première couronne circulaire de rayon R_i solidaire d'une deuxième couronne circulaire de rayon R_m. Préférentiellement, le diamètre externe maximal 2R_M de la bague latérale 16 est inférieur au diamètre externe dudit palier. De par l'agencement de deux rayons internes, respectivement R_i et R_m, une fixation de ladite bague latérale 16 contre un flanc ou côté latéral dudit palier permet de dégager un espace E entre la partie de la bague latérale 16 caractérisée par ledit rayon interne minimum R_m et le corps dudit palier, ledit espace E étant destiné à former ladite rainure latérale 15. La bague latérale 16 peut également être configurée pour que ledit espace E s'ouvre radialement vers l'extérieur dudit palier, de façon à créer ladite ouverture radiale 14' permettant une évacuation radiale du lubrifiant récupéré dans ledit espace E par un déflecteur ou par une rainure secondaire 24. Préférentiellement, des moyens de fixation 17, par exemple un système de visserie, permet de fixer chaque bague latérale 16 au côté latéral dudit palier. Optionnellement, et selon un mode particulier de réalisation non représenté desdits moyens de fixation, la bague latérale 16 a uniquement un rayon interne minimum R_m et lesdits moyens de fixation permettent de créer ledit espace E entre la bague latérale 16 et le flanc du palier, ledit espace E pouvant également s'ouvrir radialement vers l'extérieur afin de permettre un écoulement radial du lubrifiant au travers desdites ouverture radiales 14'.

Le palier selon l'invention peut comprendre plusieurs injecteurs configurés pour alimenter la face supérieure 11 des patins 2 en lubrifiant, ainsi que plusieurs déflecteurs permettant de gérer le flux de lubrifiant circulant sur ladite face supérieure 11. Préférentiellement, lesdits injecteurs et déflecteurs sont appairés de façon à former ledit dispositif d'injection/déflexion 13. Selon ce mode de réalisation préférentiel, le palier selon l'invention comprend ainsi un ensemble de dispositifs d'injection/déflexion 13 répartis uniformément (i.e. la longueur d'arc de cercle séparant deux dispositifs d'injection/déflexion l'un de l'autre est constante) par rapport à la circonférence de la cavité du palier. La figure 4 présente un exemple particulier du palier selon l'invention comprenant cinq dispositifs d'injection/déflexion 13 chacun disposé dans l'espace 12 compris entre deux patins 2 successifs. Le détail G de la figure 4 est illustré en figure 5.

Ainsi qu'illustré en figures 5-7 et comme expliqué précédemment, un déflecteur selon l'invention incorporant également la fonction d'injection forme un dispositif d'injection/ déflexion 13 qui comprend alors une partie injection qui est ladite seconde partie 132 dudit déflecteur qui incorpore l'injecteur, et une partie déflexion destinée à la collecte de lubrifiant et formée par la première partie 131 dudit déflecteur.

Ladite première partie 131 du dispositif d'injection/déflexion est configurée pour être positionnée en amont de la seconde partie 132 par rapport au sens de rotation w de l'arbre rotatif lorsque le dispositif d'injection/déflexion est installé dans ledit espace 12. La première partie 131 comprend en particulier une partie caractérisée par une section triangulaire ST de sommet S configurée pour pointer radialement vers la cavité dudit palier ainsi que représenté en Fig. 6 lorsque ledit dispositif d'injection/déflexion 13 est installé dans l'espace 12 dudit palier. Le sommet S du triangle destiné à pointer radialement vers ladite cavité est situé sous le niveau de ladite surface active du ou des patins les plus proches, et les côtés partant dudit sommet S s'étendant chacun à partir dudit sommet vers une des rainures latérales 15. Préférentiellement, ladite première partie 131 est limitée, en aval, par ladite seconde partie 132 dudit dispositif d'injection/déflexion 13 qui, elle, est caractérisée par une section SR substantiellement rectangulaire. Ladite seconde partie 132 comprend notamment une surface supérieure, dite surface de lubrification 140, s'étendant dans un plan dont le prolongement est tangent à la surface active la plus proche. Préférentiellement, ladite seconde partie 132 comprend une extension 133 s'étendant au moins partiellement en porte-à-faux au-dessus de ladite section triangulaire ST.

Préférentiellement, ladite seconde partie 132 comprend une cavité formant un canal 134 s'étendant sur toute la longueur selon ledit axe A de ladite seconde partie 132, ledit canal 134 communiquant via l'ouverture radiale 14 avec une alimentation en lubrifiant et débouchant via des orifices 135 dans ladite cavité, par exemple substantiellement au niveau de ladite surface de lubrification 140 afin de pouvoir alimenter en lubrifiant un interstice formé entre la surface active des patins et l'arbre rotatif. En particulier, chacun desdits orifices 135 débouche sur une rigole 136 creusée dans ladite surface de lubrification 140 de ladite seconde partie 132.

Préférentiellement, ladite surface de lubrification 140 est substantiellement plane et comprend ladite extension 133 s'étendant au moins partiellement en porte-à-faux au-dessus de ladite première partie 131 de section triangulaire ST. Selon ce mode de réalisation, ladite rigole 136 est positionnée en aval de ladite extension 133 lorsque ledit dispositif d'injection/déflexion est installé dans un espace 12 entre deux patins consécutifs. En particulier, l'extrémité amont de ladite extension 133 se trouve au même niveau que la surface active du patin le plus proche et l'extrémité avale de ladite surface de lubrification 140 est située légèrement en deçà de ladite surface active du patin le plus proche, i.e. plus éloignée de l'arbre rotatif que la surface active du patin le plus proche.

En conclusion, la présente invention propose un palier hydrodynamique d'un nouveau genre comprenant des patins 2 à surface active réduite lorsque ces derniers équipent un secteur passif dudit palier. Optionnellement, un système élastique couple lesdits patins de façon à stabiliser la rotation dudit palier, et des dispositifs d'injection/déflexion 13 amovibles et insérables entre lesdits patins 2 permettent d'une part d'injecter du lubrifiant dans un interstice entre la surface active du patin et l'arbre rotatif, et d'autre part de dévier un flux de lubrifiant en direction de rainures ou gorges latérales 15 de façon à ce que le lubrifiant chauffé durant le travail de l'arbre rotatif soit guidé vers lesdites rainures latérales 15 afin d'être évacué hors dudit palier.

**Revendications**

1. Palier hydrodynamique comprenant un corps (1) dont une surface interne forme une cavité agencée pour accueillir et entourer un arbre rotatif, ladite cavité étant pourvue d'une pluralité de patins (2) installés sur ladite surface interne de façon à supporter et guider en rotation ledit arbre rotatif selon un sens de rotation w d'«amont» vers «aval», chaque patin (2) comprenant une surface supérieure (11) dont une partie appelée « surface active » sert de surface de glissement pour ledit arbre rotatif, ledit palier comprenant :

   - au moins un patin (2) compris dans un secteur angulaire actif (2A) dudit palier et au moins un patin (2) compris dans un secteur angulaire passif (2B) dudit palier, la surface active d'au moins un patin (2) du secteur angulaire passif (2B) est inférieure à la surface active de chacun des patins (2) du secteur angulaire actif (2A);

   ledit palier étant **caractérisé en ce que** la surface active d'au moins un patin (2) du secteur angulaire passif (2B) comprend une surface sculptée (22, 23) de façon à créer des rainures secondaires (24) dirigées vers une rainure latérale (15) s'étendant selon au moins une partie de la circonférence dudit palier.

2. Palier (1) selon revendication 1, comprenant au moins un injecteur (13) configuré pour alimenter en lubrifiant ladite surface supérieure (11) et au moins un déflecteur (13) configuré pour réduire une recirculation du lubrifiant sur ladite surface supérieure (11).

3. Palier (1) selon une des revendications 1 ou 2, pour lequel la surface active d'au moins un patin (2) du secteur angulaire passif (2B) comprend au moins une surface lisse (21) en forme de bande s'étendant continument d'une extrémité amont à une extrémité avale dudit patin (2), et, selon la largeur dudit patin, sur une partie centrale dudit patin (2).

4. Palier (1) selon la revendication 1 à 3, pour lequel au moins une ou chaque rainure secondaire (24) forme un angle oblique avec un plan perpendiculaire à un axe A de rotation dudit arbre rotatif.

5. Palier (1) selon une des revendications 1 à 4, pour lequel au moins deux patins (2) consécutifs sont couplés l'un à l'autre par un système élastique (3) destiné à limiter un flottement angulaire desdits patins.

6. Palier (1) selon revendication 5, pour lequel chaque patin (2) est couplé à chacun de ses plus proches voisins par ledit système élastique (3).

7. Palier (1) selon une des revendications 1 à 6, **caractérisé en ce qu'**il comprend une bague latérale (16) en forme d'anneau disposée latéralement contre le corps dudit palier et configurée pour bloquer un flux latéral dudit lubrifiant hors de ladite cavité.

8. Palier (1) selon revendication 7, **caractérisé en ce que** ladite bague latérale (16) comprend au moins un orifice de calibration d'un débit de fuite de lubrifiant hors dudit palier (1).

9. Palier (1) selon revendication 8, pour lequel ledit orifice de calibration comprend un système de réglage du débit de fuite.

10. Palier (1) selon une des revendications 2 à 9, **caractérisé en ce que** ledit déflecteur comprend une première partie (131) et une seconde partie (132), la première partie (131) étant positionnée en amont de la seconde partie (132) et à une distance radiale plus éloignée du centre de la cavité que ladite surface active du patin le plus proche, la seconde partie (132) s'étendant vers l'amont de façon à former un porte-à-faux surplombant la première partie (131).

11. Palier (1) selon revendication 10, pour lequel ladite seconde partie (132) s'étend au moins partiellement d'une part radialement en direction du centre de la cavité jusqu'à une distance radiale la séparant du centre de la cavité égale à la distance radiale M séparant ledit centre de la cavité de la surface active du patin (2) le plus proche de ladite seconde partie (132), et d'autre part vers l'amont afin de former ledit porte-à-faux.

12. Palier (1) selon une des revendications 10 ou 11, pour lequel la seconde partie (132) comprend une surface de lubrification (140) plane s'inscrivant dans un plan dont le prolongement est tangent au moins une surface active d'un des patins (2) les plus proches, ladite surface de lubrification (140) s'étendant en direction de l'amont afin de former ledit porte-à-faux.

13. Palier (1) selon une des revendications 2 à 12, **caractérisé en ce que** ledit injecteur comprend des orifices (135) d'approvisionnement en lubrifiant de ladite surface supérieure (11), le diamètre desdits orifices (135) variant en fonction d'une position axiale dudit orifice (135) de façon à maintenir un débit de lubrifiant identique pour chaque orifice (135).

14. Palier (1) selon une des revendications 11 à 13, pour lequel ladite seconde partie (132) dudit déflecteur comprend ledit injecteur.

15. Palier (1) selon une des revendications 5 ou 6, **caractérisé en ce que** le système élastique comprend un anneau élastique ouvert dont chaque extrémité est couplée à un patin respectif.


**Patentansprüche**

1. Hydrodynamisches Lager, welches ein Gehäuse (1) umfasst, bei dem eine Innenfläche einen Hohlraum bildet, der dafür eingerichtet ist, eine rotierende Welle aufzunehmen und zu umgeben, wobei der Hohlraum mit mehreren Segmenten (2) versehen ist, die an der Innenfläche angebracht sind, um die rotierende Welle zu lagern und bei der Drehung in einer Drehrichtung w von "stromaufwärts" nach "stromabwärts" zu führen, wobei jedes Segment (2) eine obere Fläche (11) umfasst, von der ein Teil, "aktive Fläche" genannt, als Gleitfläche für die rotierende Welle dient, wobei das Lager umfasst:

- wenigstens ein Segment (2), das in einem aktiven Winkelsektor (2A) des Lagers enthalten ist, und wenigstens ein Segment (2), das in einem passiven Winkelsektor (2B) des Lagers enthalten ist, wobei die aktive Fläche wenigstens eines Segments (2) des passiven Winkelsektors (2B) kleiner als die aktive Fläche jedes der Segmente (2) des aktiven Winkelsektors (2A) ist;

wobei das Lager **dadurch gekennzeichnet ist, dass** die aktive Fläche wenigstens eines Segments (2) des passiven Winkelsektors (2B) eine profilierte Fläche (22, 23) umfasst, um sekundäre Nuten (24) zu erzeugen, die zu einer seitlichen Nut (15) hin gerichtet sind, die sich entlang wenigstens eines Teils des Umfangs des Lagers erstreckt.

2. Lager (1) nach Anspruch 1, welches wenigstens einen Injektor (13), der dafür ausgelegt ist, die obere Fläche (11) mit Schmiermittel zu versorgen, und wenigstens einen Deflektor (13), der dafür ausgelegt ist, einen Rücklauf des Schmiermittels auf der oberen Fläche (11) zu reduzieren, umfasst.

3. Lager (1) nach einem der Ansprüche 1 oder 2, wobei die aktive Fläche wenigstens eines Segments (2) des passiven Winkelsektors (2B) wenigstens eine glatte Fläche (21) in Form eines Streifens umfasst, der sich durchgehend von einem stromaufwärtigen Ende zu einem stromabwärtigen Ende des Segments (2) und entlang der Breite des Segments auf einem mittleren Teil des Segments (2) erstreckt.

4. Lager (1) nach Anspruch 1 bis 3, wobei wenigstens eine oder jede sekundäre Nut (24) einen schiefen Winkel mit einer zu einer Drehachse A der rotierenden Welle senkrechten Ebene bildet.

5. Lager (1) nach einem der Ansprüche 1 bis 4, wobei wenigstens zwei aufeinander folgende Segmente (2) durch ein elastisches System (3) miteinander gekoppelt sind, das dazu bestimmt ist, ein Wackeln der Segmente in Winkelrichtung zu begrenzen.

6. Lager (1) nach Anspruch 5, wobei jedes Segment (2) mit jedem seiner nächsten Nachbarn durch das elastische System (3) verbunden ist.

7. Lager (1) nach einem der Ansprüche 1 bis 6, **dadurch gekennzeichnet, dass** es eine seitliche Hülse (16) in Ringform umfasst, die seitlich am Gehäuse des Lagers anliegend angeordnet ist und dafür ausgelegt ist, einen seitliche Ausfluss des Schmiermittels aus dem Hohlraum zu blockieren.

8. Lager (1) nach Anspruch 7, **dadurch gekennzeichnet, dass** die seitliche Hülse (16) wenigstens eine Kalibrieröffnung für eine Leckrate des Schmiermittels aus dem Lager (1) umfasst.

9. Lager (1) nach Anspruch 8, wobei die Kalibrieröffnung ein System zur Regelung der Leckrate umfasst.

10. Lager (1) nach einem der Ansprüche 2 bis 9, **dadurch gekennzeichnet, dass** der Deflektor einen ersten Teil (131) und einen zweiten Teil (132) umfasst, wobei der erste Teil (131) stromaufwärts des zweiten Teils (132) und in einem größeren radialen Abstand vom Mittelpunkt des Hohlraums als die aktive Fläche des nächstgelegenen Segments angeordnet ist, wobei sich der zweite Teil (132) so stromaufwärts erstreckt, dass er eine Auskragung bildet, die über den ersten Teil (131) hinausragt.

11. Lager (1) nach Anspruch 10, wobei sich der zweite Teil (132) wenigstens teilweise einerseits radial in Richtung des Mittelpunkts des Hohlraums bis zu einem ihn vom Mittelpunkt des Hohlraums trennenden radialen Abstand erstreckt, der gleich dem radialen Abstand M ist, der den Mittelpunkt des Hohlraums von der aktiven Fläche des dem zweiten Teil (132) nächstgelegenen Segments (2) trennt, und andererseits stromaufwärts, um die Auskragung zu bilden.

12. Lager (1) nach einem der Ansprüche 10 oder 11, wobei der zweite Teil (132) eine ebene Schmierfläche (140) umfasst, die in einer Ebene liegt, deren Verlängerung tangential zu wenigstens einer aktiven Fläche eines der nächstgelegenen Segmente (2) verläuft, wobei sich die Schmierfläche (140) in stromaufwärtiger Richtung erstreckt, um die Auskragung zu bilden.

13. Lager (1) nach einem der Ansprüche 2 bis 12, **dadurch gekennzeichnet, dass** der Injektor Öffnungen (135) zur Versorgung der oberen Fläche (11) mit Schmiermittel umfasst, wobei der Durchmesser der Öffnungen (135) in Abhängigkeit von einer axialen Position der Öffnung (135) variiert, um so einen Durchfluss von Schmiermittel aufrechtzuerhalten, der für alle Öffnungen (135) identisch ist.

14. Lager (1) nach einem der Ansprüche 11 bis 13, wobei der zweite Teil (132) des Deflektors den Injektor umfasst.

15. Lager (1) nach einem der Ansprüche 5 oder 6, **dadurch gekennzeichnet, dass** das elastische System einen offenen elastischen Ring umfasst, von dem jedes Ende mit einem jeweiligen Segment gekoppelt ist.

**Claims**

1. Hydrodynamic bearing comprising a body (1) of which an inner surface forms a cavity arranged to accommodate and surround a rotary shaft, said cavity being provided with a plurality of pads (2) installed on said inner surface so as to support and guide the rotation of said rotary shaft in a direction of rotation w from "upstream" to "downstream", each pad (2) comprising a top surface (11) of which a part called "active surface" serves as slip surface for said rotary shaft, said bearing comprising:

   - at least one pad (2) contained within an active angular segment (2A) of said bearing and at least one pad (2) included in a passive angular segment (2B) of said bearing, the active surface of at least one pad (2) of the passive angular segment (2B) is smaller than the active surface of each of the pads (2) of the active angular segment (2A) ;

   said bearing being **characterized in that** the active surface of at least one pad (2) of the passive angular segment (2B) comprises a sculpted surface (22, 33) so as to create secondary grooves (24) directed towards a lateral groove (15) extending along at least a part of the circumference of said bearing.

2. Bearing (1) according to Claim 1, comprising at least one injector (13) configured to supply lubricant to said top surface (11) and at least one deflector (13) configured to reduce a recirculation of the lubricant on said top surface (11).

3. Bearing (1) according to one of Claims 1 and 2, for which the active surface of at least one pad (2) of the passive angular segment (2B) comprises at least one smooth surface (21) in the form of a strip extending continually from an upstream end to a downstream end of said pad (2), and, widthwise on said pad, over a central part of said pad (2).

4. Bearing (1) according to Claims 1 to 3, for which at least one or each secondary groove (24) forms an oblique angle with a plane at right angles to an axis A of rotation of said rotary shaft.

5. Bearing (1) according to one of Claims 1 to 4, for which at least two consecutive pads (2) are coupled to one another by an elastic system (3) intended to limit an angular floating of said pads.

6. Bearing (1) according to Claim 5, for which each pad (2) is coupled to each of its closest neighbours by said elastic system (3).

7. Bearing (1) according to one of Claims 1 to 6, **characterized in that** it comprises a lateral ring (16) of annular form disposed laterally against the body of said bearing and configured to block a lateral flow of said lubricant out of said cavity.

8. Bearing (1) according to Claim 7, **characterized in that** said lateral ring (16) comprises at least one calibration orifice for calibrating a lubricant leak flow rate out of said bearing (1).

9. Bearing (1) according to Claim 8, for which said calibration orifice comprises a leak flow rate adjustment system.

10. Bearing (1) according to one of Claims 2 to 9, **characterized in that** said deflector comprises a first part (131) and a second part (132), the first part (131) being positioned upstream of the second part (132) and at a radial distance further away from the centre of the cavity than said active surface of the closest pad, the second part (132) extending upstream so as to form an overhang overhanging the first part (131).

11. Bearing (1) according to Claim 10, for which said second part (132) extends at least on one side radially towards the centre of the cavity to a radial distance separating it from the centre of the cavity equal to the radial distance M separating said centre of the cavity from the active surface of the pad (2) closest to said second part (132), and on the other side upstream in order to form said overhang.

12. Bearing (1) according to one of Claims 10 and 11, for which the second part (132) comprises a flat lubrication surface (140) contained within a plane of which the extension is tangential to at least one active surface of one of the closest pads (2), said lubrication surface (140) extending upstream in order to form said overhang.

13. Bearing (1) according to one of Claims 2 to 12, **characterized in that** said injector comprises orifices (135) for supplying lubricant to said top surface (11), the diameter of said orifices (135) varying according to an axial position of said orifice (135) so as to maintain an identical lubricant flow rate for each orifice (135).

14. Bearing (1) according to one of Claims 11 to 13, for which said second part (132) of said deflector comprises said injector.

15. Bearing (1) according to one of Claims 5 and 6, **characterized in that** the elastic system comprises an open elastic ring of which each end is coupled to a respective pad.

FIG 1

FIG 2

FIG 3

FIG 4

FIG 5

FIG 6

13

ST

134

136

135

132

140

S

133

SR

131

FIG 7

2A

15

16

22

24

2

21

23

2B

24

14'

FIG 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20020018604 A1 **[0003]**
- EP 0298835 A **[0004]**
- EP 2634440 A **[0005]**